(19) **Europäisches Patentamt**

**European Patent Office**

**Office européen des brevets**

(11) **EP 1 584 538 A1**

(12) **EUROPEAN PATENT APPLICATION**
published in accordance with Art. 158(3) EPC

(43) Date of publication:
**12.10.2005 Bulletin 2005/41**

(51) Int Cl.⁷: **B62D 1/20**, F16D 3/06

(21) Application number: **03778959.1**

(86) International application number:
**PCT/JP2003/016088**

(22) Date of filing: **16.12.2003**

(87) International publication number:
**WO 2004/056638 (08.07.2004 Gazette 2004/28)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.12.2002 JP 2002370654**

(71) Applicant: **NSK Ltd.**
**Tokyo 141-8560 (JP)**

(72) Inventors:
• **TANIGUCHI, Masato, NSK LTD.**
**Fujisawa-shi, Kanagawa 251-0021 (JP)**
• **YAMADA, Yasuhisa, c/o NSK LTD.**
**Maebashi-shi, Gunma 371-0853 (JP)**

(74) Representative:
**Cross, James Peter Archibald et al**
**R.G.C. Jenkins & Co.**
**26 Caxton Street**
**GB-London SW1H 0RJ (GB)**

(54) **TELESCOPIC SHAFT FOR MOTOR VEHICLE STEERING**

(57) Spherical members 7 are provided between plural pairs of axial grooves 3, 5 which are respectively formed on the outer peripheral surface of a male shaft 1 and on the inner peripheral surface of a female shaft 2, a leaf spring 9 for preload is interposed between the axial groove of the male shaft and the spherical member, and columnar members 8 are provided between another plural pairs of axial grooves 4, 6 which are respectively formed on the outer peripheral surface of the male shaft 1 and on the inner peripheral surface of the female shaft 2. Moreover, the radius of curvature of a transverse cross section of the axial groove 5 on the side of the female shaft 2 in which the spherical member 7 is rotated is set as 55% or less of the diameter of the spherical member 7.

# FIG. 5A

EP 1 584 538 A1

# FIG. 5B

## Description

TECHNICAL FIELD

The present invention relates to a telescopic shaft for vehicle steering which is installed in a steering shaft of a vehicle and in which a male shaft and a female shaft are fitted to each other to be mutually unrotatable and slidable.

BACKGROUND ART

A telescopic shaft of a steering mechanism of a vehicle is required to have a property of absorbing an axial displacement which is generated when the vehicle is running and of preventing such displacement or vibration from being propagated onto a steering wheel. Further, the telescopic shaft is also required to have a function of moving the position of the steering wheel in the axial direction and of adjusting this position in order to obtain an optimal position for the driver to drive the vehicle.

In any event, the telescopic shaft is required to reduce rattling noise, to decrease backlash feeling on the steering wheel, and to reduce a sliding resistance during a sliding operation in the axial direction.

For such reasons, conventionally, a male shaft of the telescopic shaft is coated with nylon film and grease is applied on a sliding portion thereof, so as to absorb or mitigate metallic noise, metallic rattle, etc., and, at the same time, to reduce a sliding resistance and backlash in the direction of rotation.

However, there is a case that abrasion of the nylon film advances with elapse of time of use and the backlash in the direction of rotation becomes great. Also, under the high-temperature condition inside the engine room, the nylon film is changed in volume, so that a sliding resistance becomes conspicuously great or the abrasion is notably quickened. As a result, backlash in the direction of rotation may become great.

On that account, in Japanese Patent Application Laid-Open No. 2001-50293, torque transmitting members (spherical members) which are rotated when a male shaft and a female shaft are relatively rotated in the axial direction are fitted between plural pairs of axial grooves respectively formed on the outer peripheral surface of the male shaft and on the inner peripheral surface of the female shaft.

Further, according to DE No.3730393C2, a leaf spring which serves as an elastic member for preload for applying preload on the male shaft and the female shaft through a torque transmitting member (spherical member) is provided between a radially inside or outside of the spherical member serving as the torque transmitting member and an axial groove which are respectively paired.

With this arrangement, since the spherical member serving as the torque transmitting member is preloaded against the female shaft by the leaf spring to the extent that no backlash is generated when torque is not transmitted, it is possible to prevent backlash between the male shaft and the female shaft, whereby the male shaft and the female shaft can slide in the axial direction with a stable sliding load without backlash.

Also, since it is arranged such that the spherical member serving as the torque transmitting member can be retained in the circumferential direction by the leaf spring when torque is transmitted, the male shaft and the female shaft can transmit the torque in a state of high rigidity while preventing backlash in the direction of rotation thereof.

However, according to Japanese Patent Application Laid-Open No. 2001-50293 or German Patent DE No.3730393C2 described above, since the spherical member is in point contact with a raceway surface of the axial groove of the female shaft or the male shaft, it is feared that impression is generated on the surface of the raceway of the axial groove which is in point contact with the spherical member if the contact pressure therebetween becomes excessively great when a torque load is applied.

In such a case, a sliding resistance may resultantly become great or uneven due to the impression on the raceway surface of the axial groove. In addition, the impression may cause damages such as peeling off due to concentration of stress or abrasion.

DISCLOSURE OF THE INVETNION

The present invention has been contrived taking such circumstances as described above into consideration, and an object thereof is to provide a telescopic shaft for vehicle steering which is capable of realizing a stable sliding load and, at the same time, preventing backlash in a direction of rotation, thereby transmitting torque in a state of high rigidity, with the reduced manufacturing cost and the improved durability.

In order to achieve the above object, according to the present invention, there is provided a telescopic shaft for vehicle steering which is installed in a steering shaft of a vehicle and in which a male shaft and a female shaft are fitted to each other to be unrotatable and slidable, characterized in that:

    a spherical member for rotating upon relative movement of the two shafts in the axial direction is disposed between at least one pair of axial grooves which are respectively formed on the outer peripheral surface of the male shaft and on the inner peripheral surface of the female shaft;

    an elastic member for applying preload on the male shaft and the female shaft through the spherical member is interposed between the axial groove of the male shaft or the female shaft and the spherical member;

    a columnar member for sliding upon relative movement of the two shafts in the axial direction is disposed between at least another one pair of axial grooves respectively formed on the outer peripheral surface of the male shaft and on the inner peripheral surface of the female shaft; and

the radius of curvature of a transverse cross section of the axial groove on the male shaft side or on the female shaft side on which the spherical member is rotated is set at 55% or less of the diameter of the spherical member.

As described above, according to the present invention, since the radius of curvature of a transverse cross section of the axial groove on the male shaft side or on the female shaft side on which the spherical member is rotated is set at 55% or less of the diameter of the spherical member, it is possible to keep a contact pressure between the spherical member and the axial groove below 1500MPa when an assumed maximum torsional torque is inputted.

As described above, if the contact pressure between the spherical member and the axial groove is kept below 1500MPa, even when the surface hardness of the telescopic shaft has a general value (e.g., HV260 to HV300 or around), generation of an impression can be prevented without fail.

Accordingly, it is possible to securely prevent generation of an impression even if a heat treatment or a surface hardening treatment is not specially performed, whereby damages such as an increase of the sliding resistance due to the impression or abrasion can be prevented effectively. As a result, it is possible to improve the durability while reducing the manufacturing cost. Also according to the present invention, it is possible to realize a stable sliding load and, at the same time, to prevent backlash in a direction of rotation, thereby transmitting torque in a state of high rigidity.

BRIEF DESCRIPTION OF THE DRAWING

Fig. 1A is a side view of a telescopic shaft for vehicle steering according to a first embodiment of the present invention, and Fig. 1B is a perspective view thereof;

Fig. 2 is a transverse cross sectional view, taken along the line A-A in Fig. 1A;

Fig. 3 is a schematic view for showing a calculation model of an analysis program for a torsional rigidity of the telescopic shaft;

Fig. 4 is a graph in which result of a torsional rigidity test of a telescopic shaft which is produced as a trial piece is indicated by a solid line and a calculation result by the analysis program by a broken line;

Fig. 5A is a longitudinal cross sectional view of a telescopic shaft for vehicle steering according to a second embodiment of the present invention, and Fig. 5B is a transverse cross sectional view, taken along the line b-b in Fig. 5A;

Fig. 6 is an exploded perspective view of the telescopic shaft for vehicle steering according to the second embodiment;

Fig. 7 is a graph for showing a calculation result of the maximum contact pressure between a spherical member and an axial groove on a female shaft side of the telescopic shaft according to the second embodiment shown in Figs. 5A and 5B, and Fig. 6;

Fig. 8 is a graph for showing a calculation result of the maximum contact pressure between a spherical member and an axial groove on a female shaft side of the telescopic shaft disclosed in the Japanese Patent Application Laid-Open No. 2001-50293 or German Patent DE No. 3730393C2; and

Fig. 9 is a side view of a steering mechanism of a vehicle in which a telescopic shaft for vehicle steering according to an embodiment of the present invention is applied.

THE PREFERRED EMBODIMENTS

A telescopic shaft for vehicle steering according to an embodiment of the present invention will be described below with reference to drawings. (Entire Structure of a Steering Shaft for a Vehicle)

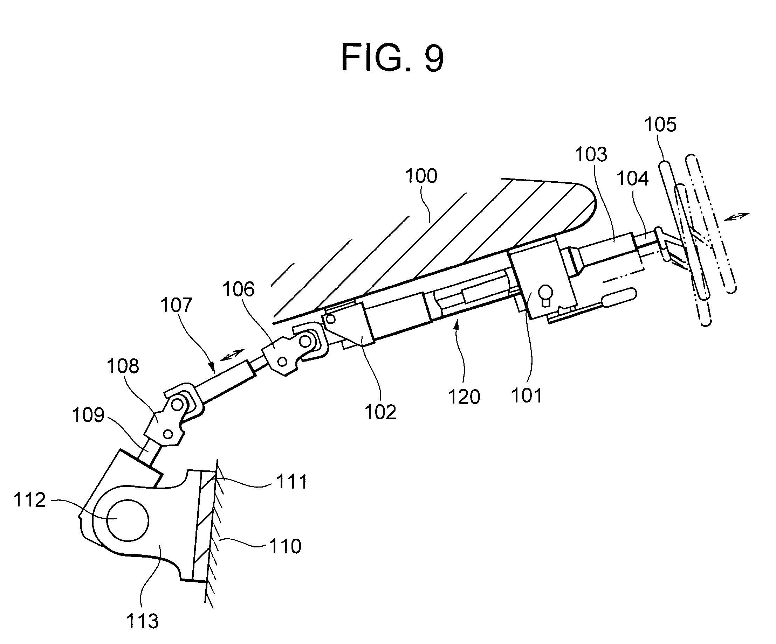

Fig. 9 is a side view of a steering mechanism of a vehicle in which a telescopic shaft for vehicle steering according to an embodiment of the present invention is applied.

In Fig. 9, the steering mechanism is constituted by an upper steering shaft portion 120 (including a steering column 103 and a steering shaft 104 retained by the steering column 103 to be rotatable) which is attached to a body-side member 100 through an upper bracket 101 and a lower bracket 102, a steering wheel 105 which is attached to an upper end of the steering shaft 104, a lower steering shaft portion 107 which is coupled to a lower end of the steering shaft 104 through a universal joint 106, a pinion shaft 109 which is coupled to the lower steering shaft portion 107 through a steering shaft joint 108, a steering rack shaft 112 coupled to the pinion shaft 109, and a steering rack supporting member 113 which supports the steering rack shaft 112 and is fixed to another frame 110 of the vehicle body through an elastic member 111.

In this case, the upper steering shaft portion 120 and the lower steering shaft portion 107 employ a telescopic shaft for vehicle steering according to an embodiment of the present invention (hereinafter called the "telescopic shaft"). The lower steering shaft portion 107 is formed by fitting a male shaft and a female shaft to each other. Such a lower steering shaft portion 107 is required to have the property of absorbing an axial displacement which is generated during the running of the vehicle so as not to transmit the displacement or vibration onto the steering wheel 105. Such a property is required for a structure in which the vehicle body is in a subframe structure so that the member 100 for fixing an upper part of the steering mechanism is separately provided from the frame 110 to which the steering rack supporting member 113 is fixed, and the steering rack supporting member 113 is fixedly clamped to the frame 110 through the elastic member 111 such as rubber. There is also another case in which an extending/contracting function is required for the steering shaft, when the steering shaft joint 108 is assembled to the pinion shaft 109 by an assembler, to once contract the telescopic shaft to be fitted and clamped to the pinion shaft 109. Further, the upper steering shaft 120 which is provided in an upper part of the steering mechanism is also formed by fitting the male shaft and the female shaft to each other. Such an upper steering shaft portion 120 is required to have the function of moving the position of the steering wheel 105 in the axial direction and then adjusting the position so as to obtain an optimal position for the driver to drive the vehicle. As a result, the upper steering shaft portion 120 requires the function of extending and contracting in the axial direction. In all the foregoing cases, the telescopic shaft is required to have a property of reducing rattling noise in the fitting portion, decreasing backlash feeling on the steering wheel 105, and reducing a sliding resistance during a sliding movement in the axial direction.

(First Embodiment of the Telescopic Shaft)

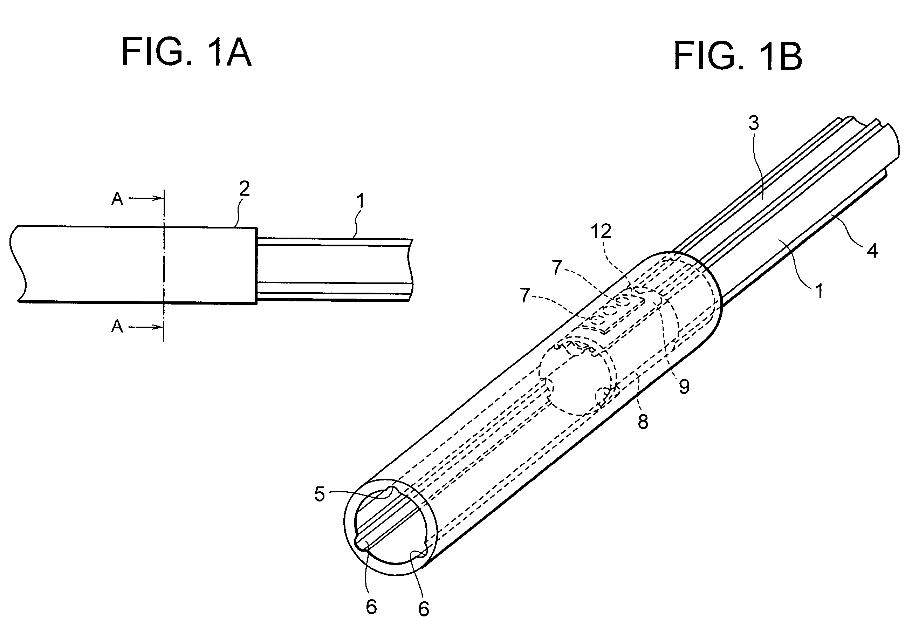

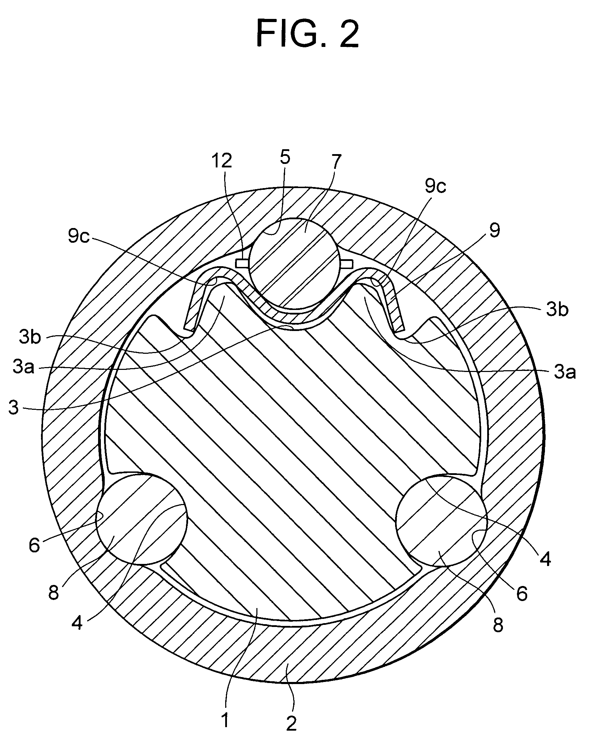

Fig. 1A is a side view of a telescopic shaft for vehicle steering according to a first embodiment of the present invention, and Fig. 1B is a perspective view thereof. Fig. 2 is a cross sectional view, taken along the line A-A in Fig. 1A.

As shown in Figs. 1A and 1B, the telescopic shaft for vehicle steering (hereinafter called the "telescopic shaft") comprises a male shaft 1 and a female shaft 2 which are fitted to each other to be unrotatable and slidable.

As shown in Fig. 2, three grooves 3, 4, 4 each having a substantially arch shape are provided on the outer peripheral surface of the male shaft 1 at regular intervals of 120° in the circumferential direction to be extended in the axial direction. To be corresponding thereto, also on the inner peripheral surface of the female shaft 2, three grooves 5, 6, 6 each having a substantially arch shape are provided at regular intervals of 120° in the circumferential direction to be extended in the axial direction. The axial grooves 3, 5, form a first interposing portion, while the axial grooves 4, 6; 4, 6 for a second interposing portion.

A leaf spring 9 for preload which will be described later is provided to serve as an elastic member extended in the axial direction and having a substantially M-shaped cross section is provided between the axial groove 3 having a substantially arch-shaped cross section of the male shaft 1 and the axial groove 5 having a substantially arch-shaped cross section of the female shaft 2. Meanwhile, a plurality of spherical members 7 which are rigid bodies are interposed to be rotatable between a central recess of the leaf spring 9 and the axial groove 5 to serve as the first torque transmitting members, thereby constituting a first torque transmitting device. The spherical members 7 are thus rotated upon relative movement of the male shaft 1 and the female shaft 2 in the axial direction, and are restrained by the leaf spring 9 during the rotation to thereby transmit torque.

Each of the two axial grooves 4, 4 of the male shaft 1 has a substantially arch-shaped or a Gothic arch-shaped cross section. Each of the two axial grooves 6, 6 of the female shaft 2 which are corresponding to the above axial grooves 4, 4 also has a substantially arch-shaped or a Gothic arch-shaped cross section. Between these grooves 4 and 6 which are corresponding to each other and are extended in the axial direction, a columnar member 8 is slidably interposed as a second torque transmitting member which allows a relative movement of the male shaft 1 and the female shaft 2 in the axial direction and transmits torque during the rotation, thereby constituting a second torque transmitting device.

Groove portions 3b, 3b are formed on both sides of the axial groove 3 of the male shaft 1 to be extended in the axial direction in parallel to the groove 3, while step portions 3a, 3a which are extended in the axial direction in the form of a ridge are formed between the axial groove 3 and the groove portions 3b, 3b. The leaf spring 9 has a substantially M-shaped cross section, and both ends thereof are extended up to the bottom portions of the groove portions 3b, 3b, respectively, to be in contact with the step portions 3a, 3a in such a manner that the tip portions thereof sandwich the step portions 3a, 3a, respectively. The leaf spring 9 is latched by the step portions 3a, 3a on both sides of the axial groove 3 of the male shaft 1 at recesses 9c, 9c of the leaf spring 9 and resultantly the whole leaf spring 9 can not move in the circumferential direction when torque is transmitted.

The leaf spring 9 is arranged to preload the spherical member 7 and the columnar members 8, 8, respectively, against the female shaft 2 to the extent that no backlash is generated when torque is not transmitted, while to be elastically deformed to restrain the spherical members 7 between the male shaft 1 and the female shaft 2 in the circumferential direction when the torque is transmitted.

The plurality of spherical members 7 are retained by a retainer 12, and the spherical members 7 and the retainer 12 are restricted in the axial movement thereof by a stop ring 11 during a sliding movement.

In the telescopic shaft arranged as described above, the spherical members 7 and the columnar members 8 are interposed between the male shaft 1 and the female shaft 2, and the spherical members 7 and the columnar members 8 are preloaded by the leaf spring 9 against the female shaft 2 to the extend that no backlash is generated. As a result, backlash between the male shaft 1 and the female shaft 2 is prevented without fail when torque is not transmitted and, at the same time, the male shaft 1 and the female shaft 2 can slide with a stable sliding load without backlash when moving in the axial direction relatively to each other.

Note that when a sliding surface is provided for a pure slip, like in the conventional art, a preload for preventing backlash can be set only to a certain extent, because a sliding load is obtained by multiplying a coefficient of friction by a preload, so that, if the preload is increased with the intention of preventing backlash or enhancing the rigidity of the telescopic shaft, the sliding load is increased, thereby forming a vicious circle.

In this respect, since the present embodiment employs a rolling mechanism as a part of the structure thereof, it is possible to increase the preload without conspicuously increasing the sliding load. With this arrangement, it is possible to achieve prevention of backlash and enhancement of the rigidity without increase of the sliding load, which can not be attained according to the prior art.

In the present embodiment, when torque is transmitted, the leaf spring 9 is elastically deformed to restrain the spherical members 7 between the male shaft 1 and the female shaft 2 in the circumferential direction, while the two columnar members 8 which are interposed between the male shaft 1 and the female shaft 2 mainly discharge the function of transmitting torque.

For example, when torque is inputted from the male shaft 1, since the preload of the leaf spring 9 is applied in the initial stage, there is generated no backlash and the reaction force against torque is generated by the leaf spring 9 to transmit the torque. In this case, the torque transmission as a whole is performed in a state that a torque transmission load between the male shaft 1, the leaf spring 9, the spherical members 7 and the female shaft 2 and a torque transmission load between the male shaft 1, the columnar members 8 and the female shaft 2 are in balance.

When the torque is further increased, since a gap between the male shaft 1 and the female shaft 2 through the columnar members 8 in the direction of rotation is set to be smaller than a gap among the male shaft 1, the leaf spring 9, the spherical members 7 and the female shaft 2 through the spherical members 7, the reaction force is received more strongly by the columnar members 8 than by the spherical members 7 so that the columnar members 8 mainly transmit the torque to the female shaft 2. For this reason, it is possible to securely prevent backlash in the direction of rotation between the male shaft 1 and the female shaft 2 and to transmit the torque in a state of high rigidity.

Note that it is preferable that the spherical member 7 is a ball of rigid body. It is also preferable that the columnar member 8 of rigid body is a needle roller.

Since the columnar member (hereinafter called needle roller) 8 receives a load thereof by line contact, there can be obtained various advantages including that the contact pressure can be kept low, compared with that in the case with a ball which receives a load by point contact. As a result, this structure is superior in the following points to a case in which all of the arrays are of ball rolling structure.

- The attenuating performance in the sliding portion is great, compared with that in the ball rolling structure. As a result, the vibration absorbing performance is high.
- If the same torque is to be transmitted, the contact pressure can be kept lower in the needle roller structure. As a result, the length of the shaft in the axial direction can be reduced so that the space can be used effectively.
- If the same torque is to be transmitted, the contact pressure can be kept lower in the needle roller structure. As a result, there is no longer required an additional process for hardening the surface of the axial groove of the female shaft by heat treatment or the like.
- The number of the constituent parts can be reduced.
- The assembling performance can be improved.
- The assembling cost can be reduced.

As described above, the needle rollers 8 play the essential role for torque transmission between the male shaft 1 and the female shaft 2, and are brought into sliding contact with the inner peripheral surface of the female shaft 2. This structure with the needle rollers is superior to the conventional structure employing spline fitting in the following respects.

- The needle rollers are manufactured in mass production, and can be manufactured at very low cost.
- The needle rollers are polished after being subjected to the heat treatment, so that they have high surface hardness and excellent abrasion fastness.
- Since the needle rollers have been polished, they have small surface roughness and a low coefficient of friction in a sliding movement. As a result, the sliding load can be kept low.
- Since the length or the layout of the needle rollers can be changed in accordance with the condition of use, the needle rollers can be used in various applications without changing the design concept.
- There is a case in which the coefficient of friction in a sliding operation is required to be further lowered, depending on the condition of use. In such a case, the sliding characteristics can be changed by carrying out the surface treatment of the needle rollers only. As a result, the needle rollers can be used in various applications without changing the design concept.

- Since needle rollers having different outer diameters by several microns can be manufactured at low cost, the gap among the male shaft, the needle rollers, and the female shaft can be minimized by selecting a diameter of the needle rollers. As a result, the rigidity of the shaft in the torsional direction can be improved easily.

On the other hand, since partially employing the spherical members (hereinafter called the balls) 7, this structure is superior in the following respects to a structure in which all of the rows are of needle roller structure and all of the rows are slidable.

- Since the ball has a low coefficient of friction, the sliding load can be kept low.
- The preload can be set as high by the use of the ball, so that prevention of backlash for a long time and high rigidity can be attained at the same time.

(Analysis Program for Torsional Rigidity of the Telescopic Shaft)

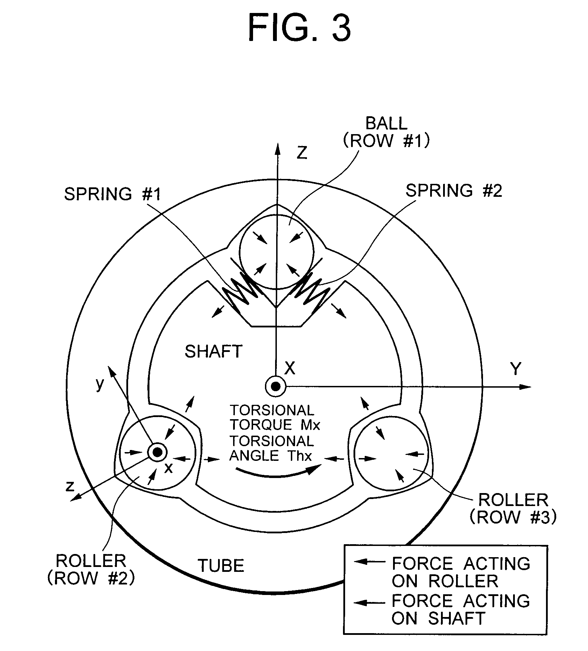

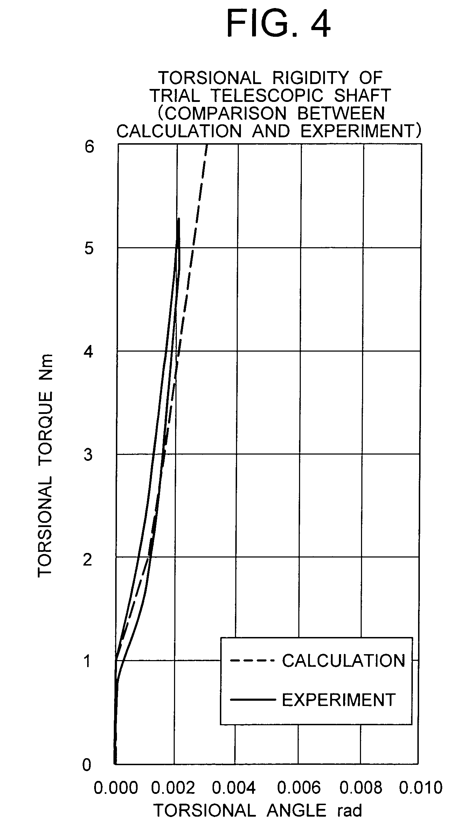

Fig. 3 is a schematic view for showing a calculation model of an analysis program for a torsional rigidity of the telescopic shaft, Fig. 4 is a graph in which result of a torsional rigidity test of a telescopic shaft which is produced as a trial piece is indicated by a solid line and a calculation result by the analysis program by a broken line.

A program for analyzing a torsional rigidity of the telescopic shaft which uses the spherical members and the columnar members by means of a computer is created. The female shaft is fixed in a space, and an expression of a balance of force applied on each spherical member or columnar member and an expression of a balance of force (the spherical member/ the columnar member/ a spring load and a torsional torque given from the outside) applied on the male shaft are solved for a transverse cross section (two-dimensional) of the telescopic shaft.

For a contact point of each element the relationship between an approximate amount and a contact load between two objects is taken into consideration on the basis of Hertz's theory of elastic contact. In this program, a spring model for applying preload can be set. A spring load is generated from the positional relationship between the two elements, i.e., the spherical member and the male shaft, which are in contact with the spring.

The analysis program is applied to the telescopic shaft which is produced as a trial piece and described in the foregoing first embodiment (shown in Figs. 1A and 1B and Fig. 2).

The male shaft 1 and the female shaft 2 respectively have three axial grooves 3, 4, 4; 5, 6, 6. A plurality of spherical member 7 are interposed between the first set of the axial grooves 3, 5, while columnar members 8, 8 are interposed between the remaining two sets of the axial grooves 4, 4; 6, 6. Preload is given to the spherical members 7 by a leaf spring 9 provided on the male shaft 1.

Fig. 4 is a graph in which result of a torsional rigidity test of a telescopic shaft which is produced as a trial piece is indicated by a solid line and a calculation result by the analysis program by a broken line. Changes in the torsional rigidity obtained by calculation give good agreement with values obtained by actual measurement.

It is shown that the performance of the actual product can be predicted with sufficient precision by using a model of elastic deformation employed in the analysis program. It is assumed that the conditions of the actual product in use, including an amount of deformation, a size of a contact area, contact pressure, etc., can be simulated with sufficient precision from the calculation by the analysis program.

(Second Embodiment of the Telescopic Shaft)

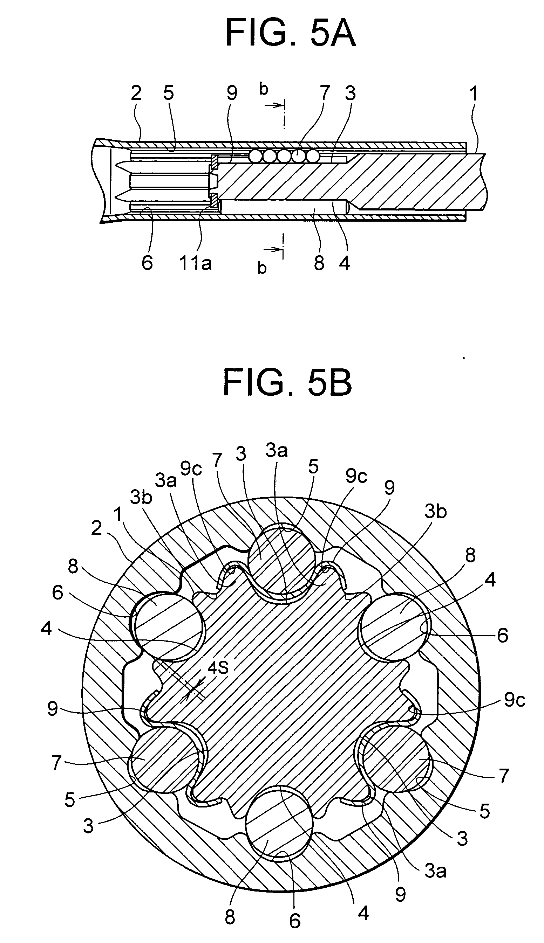

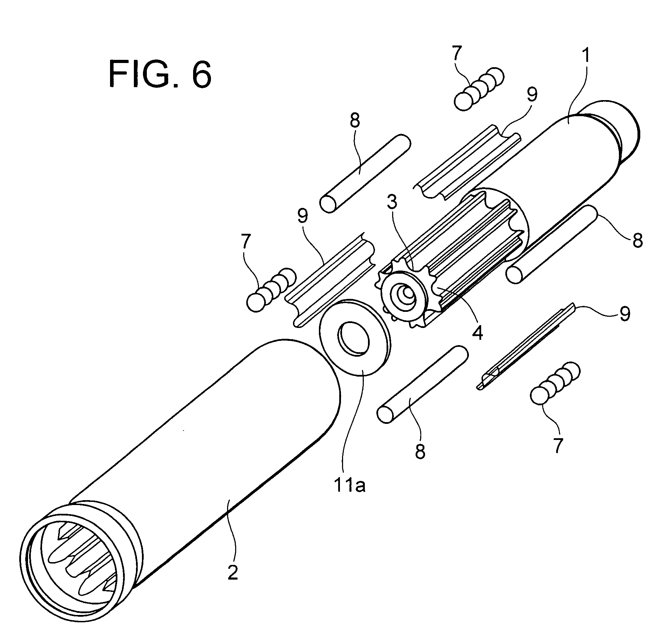

Fig. 5A is a longitudinal cross sectional view of a telescopic shaft for vehicle steering according to a second embodiment of the present invention, and Fig. 5B is an enlarged transverse cross sectional view, taken along the line b-b in Fig. 5A. Fig. 6 is an exploded perspective view of the telescopic shaft for vehicle steering according to the second embodiment.

In the first embodiment described above, one set of first torque transmitting member 7 is provided between one pair of axial grooves 3, 5, and two sets of second torque transmitting members 8 are provided between two pairs of axial grooves 4, 6 which are provided at regular intervals of 120° in the circumferential direction with respect to the above one pair of the axial grooves 3, 5.

On the other hand, in the second embodiment, as shown in Figs. 5A and 5B, the spherical members 7 serving as first torque transmitting members are respectively provided between three pairs of grooves 3 and 5 extended in the axial direction at regular intervals of 120° in the circumferential direction through leaf springs 9 as elastic members, so as to constituting a first torque transmitting device. The columnar members 8 serving as second torque transmitting members are respectively provided between three pairs of grooves 4 and 6 extended in the axial direction at regular intervals of 60° in the circumferential direction between the former three pairs of axial grooves 3 and 5, so as to constituting a second torque transmitting device.

In the second embodiment, the form and structure of the three pairs of axial grooves 3 and 5 and those of the leaf spring 9 are the same as those of the axial grooves 3 and 5 and the leaf spring 9 in the first embodiment, respectively. Also in the second embodiment, the form and structure of the three pairs of grooves 4 and 6 extended in the axial direction are the same as those of the axial grooves 4 and 6 in the first embodiment, respectively.

As a technical background of the second embodiment, various characteristics of the torsional rigidity are required because of different required performance for each vehicle. Conventionally, whenever the required performance is changed, the diameter of the shaft is changed or an elastic member is used, whereby the structure of the shaft is changed to meet the required performance.

However, in these cases, it is required to prepare various constituent parts having different structures and elastic performances, which results in an increase in the number of the constituent parts and the cost.

Under these circumstances, according to the second embodiment, since it is possible to manufacture the columnar members 8 having different outer diameters by several microns at a low cost, it is possible to arbitrarily set a gap among the male shaft 1, the columnar member 8 and the female shaft 2 by properly selecting or combining the diameters of the columnar members 8. For the above reason, it is possible to meet various requirements which are different depending on the characteristics of each vehicle at a low cost without changing the basic structure and without increasing the number of the constituent parts.

(Simulation of the Torsional Rigidity of the Telescopic Shaft by the Analysis program)

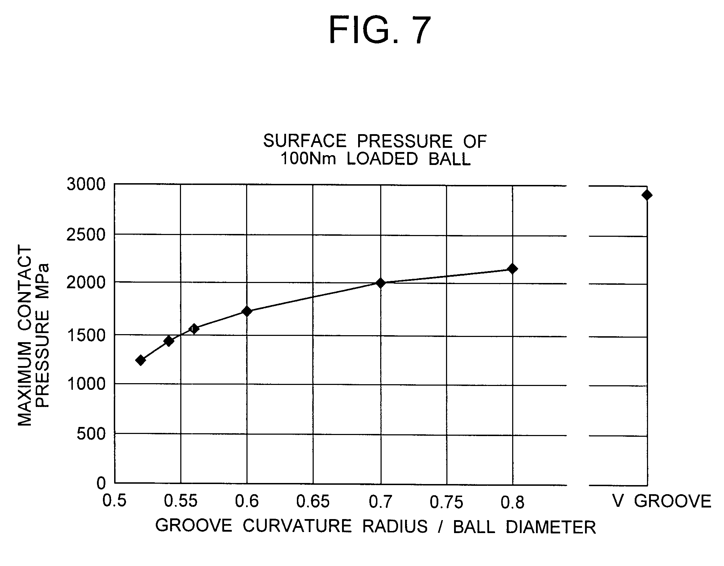

Fig. 7 is a graph for showing a calculation result of the maximum contact pressure between the spherical member and the axial groove on the female shaft side of the telescopic shaft according to the second embodiment (shown in Figs. 5A and 5B, and Fig. 6).

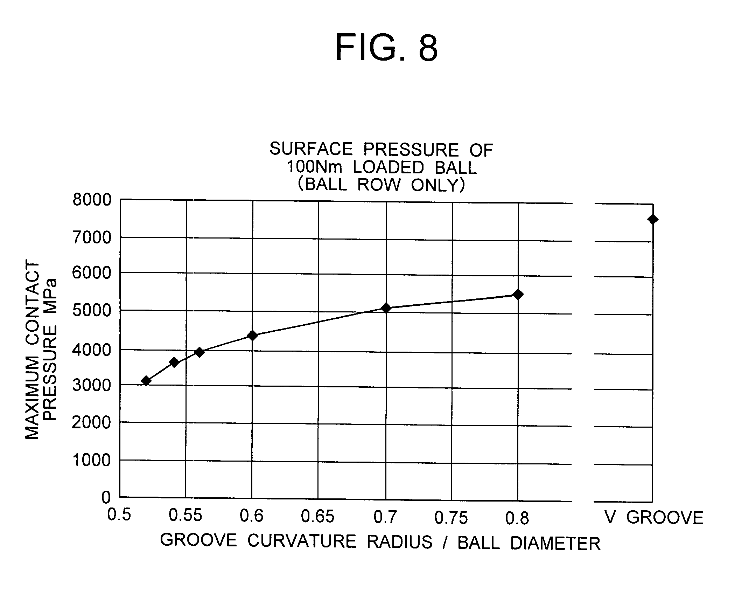

Fig. 8 is a graph for showing a calculation result of the maximum contact pressure between the spherical member and the axial shaft on the female shaft side of the telescopic shaft disclosed in the Japanese Patent Application Laid-Open No. 2001-50293 or German Patent DE No. 3730393C2.

This program is applied to the telescopic shaft described in the foregoing second embodiment (shown in Figs. 5A and 5B and Fig. 6). The maximum torsional torque of 100 Nm which is presumed for a vehicle is loaded between the female shaft 2 and the male shaft 1.

In this case, the torque is transmitted mainly through a needle roller 8 which is interposed between the female shaft 2 and the male shaft 1. However, a ball 7 which is spring-preloaded bears a part of the torque. The needle roller 8 is brought into line contact with the female shaft 2 and the male shaft 1 and has a wide contact area, so that a contact pressure in this case is comparatively small and causes no serious problem even if the contact load is great. On the other hand, the ball 7 is brought into point contact with the axial groove 5 on the female shaft 2 side or the surface of the leaf spring 9. Though a load borne by the ball 7 for the torque transmission is small, compared with that borne by the needle roller 8, since the ball 7 is in point contact and has a small contact area, there is possibility that the contact pressure is conspicuously high.

Fig. 7 shows calculation result of the maximum contact pressure between the ball 7 and the axial groove 5 of the female shaft 2 with respect to the torsional torque of 100 Nm, which is obtained by using the analysis program.

Here, a cross section of the axial groove 5 is Gothic arch-shaped. The abscissa of the graph represents the radius of curvature of a transverse cross section of the axial groove 5 on the side of the female shaft 2 as a ratio to the diameter of the ball 7. With an increase of the radius of curvature of the cross section, the maximum contact pressure between the ball 7 and the female shaft 2 becomes higher. Thus, when the axial groove 5 on the female shaft 2 side is a V-shaped groove (with the flat surface and with an infinite radius of curvature of the cross section), the contact pressure becomes very high to be near 3000 MPa.

When such a great contact pressure is applied, if the hardness of the material is not insufficient, there is a fear that an impression is generated on a raceway surface in contact with the ball 7. When an impression is generated on the raceway surface, a sliding resistance becomes great and uneven. The impression may cause damages such as exfoliation, abrasion, etc., owing to stress concentration.

The hardness required for preventing generation of an impression can be obtained roughly in the following manner. The relationship between a yield shearing stress of the material and a Vickers hardness HV can be expressed roughly as follows (Toru Yoshida, Surface Hardening Technology for design engineer, Nikkan Kogyo Shimbun, LTD):

$$HV = 6 \times \tau Y \qquad (1)$$

wherein HV is a Vickers hardness of the material and
$\tau Y$ is the yield shearing stress [kgf/mm$^2$] of the material.

If a unit of the stress is in SI unit system, the following expression can be roughly established:

$$HV = 0.6 \times \tau Y \qquad (2)$$

wherein $\tau Y$ is the yield shearing stress [MPa] of the material.

On the other hand, the maximum contact pressure Pmax and the maximum shearing stress inside the material has the following relationship, according to the Hertz's theory (for example, T.A. Harris, Rolling Bearing Analysis- 4$^{th}$ edition, John Wiley & Sons).

In case of line contact:

$$\tau \max = 0.3 \times P\max$$

In case of elliptic contact:

$$\tau \max = (1 / 3) \times P\max \qquad (3)$$

In order to prevent generation of an impression, the maximum shearing stress is required not to exceed the yield shearing stress of the material.

$$\tau Y > \tau \max \qquad (4)$$

From the expressions (2), (3) and (4), the following expression is established.

$$HV = 0.6 \times \tau Y \geqq 0.6 \times \tau \max = 0.2 \times P\max$$

$$HV \geqq 0.2 \times P\max \qquad (5)$$

wherein Pmax is the maximum contact pressure [MPa].

Since the maximum shearing stress is generated in a slightly inner part than the surface of the material, the hardness at the depth position at which the maximum contact pressure and the maximum shearing stress are generated is required to satisfy the expression (5), to be exact. However, taking into consideration that, in a normal surface hardening treatment, the surface is the hardest and the degree of hardness gradually decreases in inner part, the surface hardness is also required to satisfy the expression (5).

For example, carbon steel for machinery structure (JIS G4051) which is widely used as material for a machine part is required, when it is to be annealed, to have a Brinell hardness of HB190 or around, at the highest (for example, JIS handbook [1]. Steel I, Japanese Standards Association) which is assumably converted into a Vickers hardness of HV 200 or around (in accordance with the same handbook). In this case, in accordance with the expression (5), in order to prevent an impression due to permanent deformation of the surface, the maximum contact pressure Pmax is required not to exceed 1000 MPa.

For manufacturing the telescopic shaft shown in Figs. 5A and 5B and Fig. 6, plastic working is more preferable than machine work such as cutting, since the telescopic shaft can be manufactured at low cost by plastic working. By plastic working, the surface hardness of a material is improved by work hardening, compared with that before the working. The surface hardness of a constituent part of the telescopic shaft which is experimentally manufactured by plastic working by the present inventors, et al, is about HV 260 to HV 300.

When the surface hardness of HV 300 is obtained by work hardening which is performed subsequently to the plastic working, in order to prevent an impression due to permanent displacement of the surface, the maximum contact pressure Pmax is required not to exceed 1500 MPa in accordance with the expression (5).

From the calculation result of the radius of curvature of the axial groove 5 and the maximum contact pressure shown in Fig. 7, it can be seen that the radius of curvature of the axial groove 5 should be 55% or less of the diameter of the ball 7 in order to make the maximum contact pressure Pmax to be 1500 MPa or less even when the torque of 100 Nm is loaded.

Note that Japanese Patent Application Laid-Open No. 2001-50293 and German Patent DE No. 3730393C2 disclose a structure that a plurality of balls are interposed between axial grooves formed on a male shaft and a female shaft to be subjected to preload by an elastic member.

As for such a telescopic shaft of a ball spline type, a contact pressure of a ball contact portion will be calculated below by using the analysis program.

In this case, such a structure is examined as that three needle rollers are removed from the telescopic shaft shown in Figs. 5A and 5B and Fig. 6 and only three rows of balls on which preload is applied by respective leaf springs support a torsional torque.

Result of calculation of the maximum contact pressure between the balls and the female shaft with respect to the torsional torque of 100 Nm by the use of the analysis program is shown in Fig. 8.

The abscissa of the graph represents, like Fig. 7, the radius of curvature of an axial groove (Gothic arch-shaped) on the female shaft 2 side in a cross section perpendicular to the axis, as a ratio to the diameter of the ball. Like Fig. 7, with an increase in the radius of curvature of the cross section, the maximum contact pressure between the ball and the female shaft becomes higher. In this structure, however, since the whole input torque is required to be supported by the balls, even when the radius of curvature of the transverse cross section of the axial groove on the female shaft side is 52% of the diameter of the ball, the contact pressure becomes high to be exceeding 3000 MPa.

It is possible to suppress the contact pressure by increasing the number of the balls, the number of ball rows, or the diameter of the ball. However, in such a case, there arises a problem that the entire diameter or length of the telescopic shaft becomes great and the manufacturing cost is also increased.

It is also possible to reduce the contact pressure by decreasing the radius of curvature of the axial groove. This case also results in an increase in the cost since it is required to process the telescopic shaft with precision so that the radius of curvature is within an allowable range of difference which is very close to 50% of the ball diameter (ball radius).

When the contact pressure is 3000 MPa or around, if the hardness of the material is sufficiently high, the telescopic shaft can be put to practical use. In case of a rolling bearing, a basic stationary rated load is provided as a load for preventing permanent deformation. Meanwhile, in case of a ball bearing, this rated load is defined as a load to provide the maximum contact pressure of 4200 MPa. In accordance with the expression (5), the hardness of HV 600 is required for the contact pressure 3000 MPa, while the hardness of HV 840 for the contact pressure of 4200 MPa. As a result, in such a structure, it is required to perform such a heat treatment as employed in a manufacturing process of a rolling bearing or other surface hardening treatment.

When such a treatment is carried out, there is a possibility that the raceway surface is deformed by the treatment and an uniform sliding load can not be obtained. Moreover, to carry out a surface hardening treatment such as a heat treatment in itself brings about an increase in the cost. When a machine work or other process is required to remove the displacement subsequent to the treatment, the manufacturing cost is further increased.

German Patent DE No. 3730393C2 discloses a structure that a surface in contact with the ball is formed of a plate member having high hardness (e.g., a spring steel plate which has been subjected to the heat treatment) in order to avoid such a problem related to the great contact pressure between the ball and a member with which it is contacted. In order to provide all of the contact portions with plate members, it is required to prepare a plurality of constituent parts having complicated shapes, which results in an increase of the cost.

It is possible to prevent an impression on a raceway part of the axial groove 5 in which the ball 7 is rotated without specially carrying out a surface hardening treatment such as a heat treatment by applying the present invention into the second embodiment described above (shown in Figs. 5A and 5B and Fig. 6). Compared with the inventions in Japanese Patent Application Laid-Open No. 2001-50293 and German Patent DE No. 3730393C2, the present invention can provide a telescopic shaft for steering which can be manufactured in compact at low cost with smooth sliding performance and high torque transmitting capability without backlash.

Note that in the second embodiment described above (Figs. 5A and 5B and Fig. 6), the cross section of the raceway of the axial groove 5 which is in contact with the ball 7 is formed to be Gothic arch-shaped. However, even when this cross section is formed in the shape of a simple arch, an ellipse, a parabola, or other curve, the present invention can be applied in the same manner to the radius of curvature of a cross section in the vicinity of the contact portion with the ball.

When a great torsional torque is applied on an axial groove having a cross section in a combined shape of a Gothic arch and a straight line, since the ball is mainly brought into contact with the Gothic arch-shaped portion of the cross section, the present invention is effective.

Specifications such as the forms, dimensions, materials, and the like, described in the above are employed as way of example, and the present invention is not limited to them.

Here, Figs. 1A and 1B, Fig. 2, Figs. 5A, 5B and Fig. 6 show the structure that the leaf spring 9 for preload is provided on the side of the male shaft 1, and the ball 7 is in contact with the leaf spring 9 and the axial groove 5 on the female shaft 2. Conversely, when the structure is such that the leaf spring 9 is provided on the side of the female shaft 2 and the ball 7 is directly in contact with the axial groove 3 on the side of the male shaft 1, the present invention is applied to the radius of curvature of a cross section of the axial groove 3 on the side of the male shaft 1.

As described above, according to the present invention, since the radius of curvature of the transverse cross section of the raceway of the axial groove of the female shaft 2 or the male shaft 1 is set as not more than 55% of the diameter of the spherical member 7, it is possible to keep the contact pressure between the spherical member 7 and the axial groove below 1500MPa even when the assumed maximum torsional torque is inputted. Particularly, it is possible to prevent generation of an impression, an increase in the sliding resistance due to the impression, and damages such as abrasion even if the heat treatment or the surface hardening treatment is not carried out specially.

Note that the present invention is not limited to the embodiments described above, but can be modified in various manners.

As described above, since the radius of curvature of the transverse cross section of the axial groove on the side of the male shaft or the female shaft in which the spherical member is rotated is set as not more than 55% of the diameter of the spherical member according to the present invention, it is possible to keep the contact pressure between the spherical member and the axial groove below 1500MPa even when the assumed maximum torsional torque is inputted.

When the contact pressure between the spherical member and the axial groove is kept below 1500MPa as described above, even if the surface hardness of the telescopic shaft is set at a normal value (HV260 to HV300 or around), generation of an impression can be securely prevented.

As a result, even if the heat treatment or the surface hardening treatment is not specially carried out, it is possible to prevent generation of an impression so as to prevent an increase in the sliding resistance due to the pressure mark and damages such as abrasion.

With this arrangement, it is possible to improve the durability of the telescopic shaft while reducing the manufacturing cost thereof. Also, according to claim 1 of the invention, it is possible to realize a stable sliding load while preventing backlash in the direction of rotation securely, so as to transmit torque in a state of high rigidity.

**Claims**

1. A telescopic shaft for vehicle steering which is installed in a steering shaft of a vehicle and in which a male shaft and a female shaft are fitted to each other to be unrotatable and slidable,
**characterized in that**:

   a spherical member for rotating upon relative movement of the two shafts in the axial direction is disposed between at least one pair of axial grooves which are respectively formed on the outer peripheral surface of the male shaft and on the inner peripheral surface of the female shaft;
   an elastic member for applying preload on the male shaft and the female shaft through the spherical member is interposed between the axial groove of the male shaft or the female shaft and the spherical member;
   a columnar member for sliding upon relative movement of the two shafts in the axial direction is disposed between at least another one pair of axial grooves respectively formed on the outer peripheral surface of the male shaft and on the inner peripheral surface of the female shaft; and
   the radius of curvature of a transverse cross section of the axial groove on the male shaft side or on the female shaft side on which the spherical member is rotated is set at 55% or less of the diameter of the spherical member.

FIG. 1A

FIG. 1B

# FIG. 2

# FIG. 3

# FIG. 4

TORSIONAL RIGIDITY OF TRIAL TELESCOPIC SHAFT (COMPARISON BETWEEN CALCULATION AND EXPERIMENT)

# FIG. 5A

# FIG. 5B

FIG. 6

EP 1 584 538 A1

# FIG. 7

SURFACE PRESSURE OF
100Nm LOADED BALL

MAXIMUM CONTACT PRESSURE MPa

GROOVE CURVATURE RADIUS / BALL DIAMETER

FIG. 8

SURFACE PRESSURE OF
100Nm LOADED BALL
(BALL ROW ONLY)

# FIG. 9

EP 1 584 538 A1

## INTERNATIONAL SEARCH REPORT

| | International application No. |
| --- | --- |
| | PCT/JP03/16088 |

A.  CLASSIFICATION OF SUBJECT MATTER
   Int.Cl⁷ B62D1/20, F16D3/06

According to International Patent Classification (IPC) or to both national classification and IPC

B.  FIELDS SEARCHED

Minimum documentation searched (classification system followed by classification symbols)
   Int.Cl⁷ B62D1/00-1/28, F16D3/06

Documentation searched other than minimum documentation to the extent that such documents are included in the fields searched
   Jitsuyo Shinan Koho         1926-1996   Toroku Jitsuyo Shinan Koho   1994-2003
   Kokai Jitsuyo Shinan Koho   1971-2003   Jitsuyo Shinan Toroku Koho   1996-2003

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | DE 3730393 A1  (Lemförder Metallwaren AG), 23 March, 1989 (23.03.89), Full text (Family: none) | 1 |
| Y | JP 2001-50293 A  (NACAM France S.A.), 23 February, 2001 (23.02.01), Full text & EP 1065397 A        & US 6343993 A | 1 |
| Y | JP 2002-539033 A  (Melchor, DAUMAL CASTELLON), 19 November, 2002 (19.11.02), Par. No. [0019]; Fig. 2 & EP 1078843 A1       & WO 00/55028 A & ES 2161127 A | 1 |

☒  Further documents are listed in the continuation of Box C.      ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
|  · 19 January, 2004 (19.01.04) |   03 February, 2004 (03.02.04) |

| Name and mailing address of the ISA/ | Authorized officer |
| --- | --- |
|    Japanese Patent Office | |
| Facsimile No. | Telephone No. |

Form PCT/ISA/210 (second sheet) (July 1998)

## INTERNATIONAL SEARCH REPORT

International application No.

PCT/JP03/16088

### C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-38142 A (Daimler Chrysler AG.),<br>08 February, 2000 (08.02.00),<br>& DE 19824477 A | 1 |
| A | JP 2001-239944 A (NSK Ltd.),<br>04 September, 2001 (04.09.01),<br>(Family: none) | 1 |
| A | Microfilm of the specification and drawings annexed<br>to the request of Japanese Utility Model Application<br>No. 27492/1991(Laid-open No. 123775/1992)<br>(Fuji Kiko Co., Ltd.),<br>10 November, 1992 (10.11.92),<br>(Family: none) | 1 |
| A | JP 2002-286034 A (The Torrington Co., Ltd.),<br>03 October, 2002 (03.10.02),<br>& DE 10202899 A1 & GB 2373551 A | 1 |

Form PCT/ISA/210 (continuation of second sheet) (July 1998)